# EUROPÄISCHE PATENTSCHRIFT

(11) **EP 0 914 564 B1**
(45) Veröffentlichungstag und Bekanntmachung des Hinweises auf die Patenterteilung: **28.03.2001**
(21) Anmeldenummer: 97951931.1
(22) Anmeldetag: 20.11.1997
(51) Int. Cl.: F15C 5/00, F15C 3/04, F16K 31/00, H01L 41/09

(54) **PIEZOELEKTRISCH BETÄTIGTES MIKROVENTIL**
PIEZO-ELECTRICALLY ACTUATED MICROVALVE
MICROSOUPAPE A ACTIONNEMENT PIEZO-ELECTRIQUE

(30) Priorität: 25.11.1996 DE 19648730; 30.01.1997 DE 19703415
(43) Veröffentlichungstag der Anmeldung: 12.05.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: KLUGE, Stefan, D-80997 München (DE)
(74) Vertreter: Schoppe, Fritz, Dipl.-Ing.
(86) Internationale Anmeldenummer: EP9706498
(87) Internationale Veröffentlichungsnummer: WO9823869

(56) Entgegenhaltungen:
- DE-A- 4 417 251
- DE-C- 19 511 022
- US-A- 5 340 081
- US-A- 5 529 279
- ROSSBERG, R., SCHMIDT, B., BÜTTGENBACH, S.: "Micro Liquid Dosing System" MICROSYSTEM TECHNOLOGIES, Bd. 2, Dezember 1995, DE, Seiten 11-16, XP002059881 in der Anmeldung erwähnt
- PATENT ABSTRACTS OF JAPAN vol. 095, no. 009, 31.Oktober 1995 & JP 07 158757 A (NIPPONDENSO CO LTD), 20.Juni 1995, in der Anmeldung erwähnt
- DOGAN, A., ET AL: "Properties of Piezoelectric Actuators" PROC. 5TH INTERNATIONAL CONFERENCE ON NEW ACTUATORS, 26. - 28.Juni 1996, DE-BREMEN, Seite 233ff XP002059882 in der Anmeldung erwähnt
- FERNANDEZ, J.F., ET AL: "Tailoring Performance of Cymbal Actuators" PROC. 5TH INTERNATIONAL CONFERENCE ON NEW ACTUATORS, 26. - 28.Juni 1996, DE-BREMEN, Seite 261ff XP002059883 in der Anmeldung erwähnt

## Beschreibung

Die vorliegende Erfindung bezieht sich auf mikromechanisch gefertigte Ventile und insbesondere auf piezoelektrisch betriebene Mikroventile.

Mikroventile können allgemein in der Pneumatik und Fluidik bei der Steuerung von Gas- und Flüssigkeits-Strömungen, also Fluidströmungen, verwendet werden. Ein solches Ventil kann dabei entweder die Funktion eines Vorsteuerventils besitzen oder direkt der Steuerung eines Volumenstromes bzw. Drucks in einem Arbeitskolben und dergleichen dienen.

Derzeit bekannte piezoelektrisch betriebene Mikroventile, die auf dem inversen piezoelektrischen Effekt beruhen, weisen eine große, meist einseitig eingespannte Piezokeramik auf, mit der der Fluidstrom direkt geregelt wird. Ein derartiges piezoelektrisch betriebenes Silizium-Mikroventil ist in R. Roßberg, B. Schmidt, S. Büttgenbach: "Micro Liquid Dosing System", Microsystem Technologies 2 (1995), Seiten 11 bis 16, Springer-Verlag 1995, beschrieben. Bei solchen Mikroventilen kann die Piezokeramik entweder selbst als Ventilstößel dienen oder es wird ein direkt von der Piezokeramik geführter Ventilstößel eingesetzt.

Die in der obigen Schrift beschriebenen Mikroventile weisen einen Nachteil dahingehend auf, daß für die für einen großen Durchfluß benötigte Auslenkung des Ventilstößels, der auch als Ventilklappe bezeichnet werden kann, über dem Ventilsitz eine sehr lange Piezokeramik benötigt wird. Zur Aufnahme einer solchen Piezokeramik ist selbstverständlich auch ein entsprechend großes Gehäuse erforderlich. Die bekannten piezobetriebenen Mikroventile, wie sie beispielsweise in der oben genannten Schrift beschrieben sind, weisen also im Vergleich zu Ihrer Baugröße eine relativ kleine Ventilöffnung, d.h. Nennweite, auf.

Aus A. Dogan, J.F. Fernandez, J.F. Tressler, K. Uchino, R.E. Newnham: "Properties of piezoelectric actuators"; Proceedings 5th International Conference on New Actuators 1996; Bremen 26.-28. Juni 1996, und J.F. Fernandez, A. Dogan, J.F. Tressler, K.Uchino, R.E. Newnham: "Tailoring performance of cymbal actuators", Proceedings 5th International Conference on New Actuators, Bremen 26.-28. Juni 1996, sind piezoelektrische Betätigungsglieder bekannt, die aus einem piezoelektrischen Keramikmaterial als einem Antriebselement bestehen, das zwischen zwei Endabdeckungen, die an ihren Rändern mit dem Keramikmaterial verbunden sind, angeordnet ist. Durch diese Anordnung wird eine laterale Bewegung der piezoelektrischen Keramik in eine große axiale Verschiebung senkrecht zu den Endabdeckungen umgewandelt und verstärkt. Wie in der Schrift "Tailoring performance of cymbal actuators" beschrieben ist, werden als Endabdeckungen Metalle bzw. Metallegierungen verwendet, beispielsweise Zirkon, Messing, kohlenstoffarmer Stahl, Molybdän oder Wolfram.

Die US-A-5529279 beschreibt ein Mikrobetätigungsglied, bei dem ein thermisches Betätigungsglied vorgesehen ist, um einen in einem ersten Substrat gebildeten Stößel, der membranartig gelagert ist, anzutreiben, um eine Öffnung offenzulassen und zu verschließen. Ein zweites Substrat ist mit dem ersten Substrat und einem Träger verbunden, derart, daß der Stößel eine das zweite Substrat durchdringende Öffnung, die mit einer Öffnung in dem Träger ausgerichtet ist, verschließt. Zwischen dem zweiten Substrat und dem Träger ist eine Isolationszelle vorgesehen, um dadurch die thermische Masse des Mikrobetätigungsglieds zu reduzieren und die thermische Energie, die durch das thermische Betätigungsglied in dem ersten Substrat entwickelt wird, thermisch zu isolieren.

In dem Abstract der JP-A-0715 8757 ist ein Mikroventil beschrieben, bei dem eine Trägerplatte, die eine Durchlaßöffnung aufweist, vorgesehen ist, wobei eine Siliziummembran mit einer Stößel-artigen Verdickung mit der Trägerplatte verbunden ist, um die Durchlaßöffnung offenzulassen oder zu verschließen. Die Membran wird durch ein auf der Membran angeordnetes Piezobauglied angetrieben.

Die DE-A-4417251 beschreibt ein Mikroventil, bei dem eine oder mehrere Durchlaßöffnungen in einem Trägerbauglied durch eine zu dem Trägerbauglied sowohl senkrechte als auch parallele Bewegung eines Verschlußbauglieds, das über elastische Verbindungselemente mit dem Trägerbauglied verbunden ist, verschließbar sind.

Der vorliegenden Erfindung liegt die Aufgabe zugrunde, ein piezoelektrisch betriebenes Mikroventil zu schaffen, das eine gegenüber bekannten piezoelektrisch betriebenen Mikroventilen deutlich reduzierte Baugröße aufweist und das ferner mit niedrigeren Betätigungskräften betätigbar sein soll.

Diese Aufgabe wird durch ein Mikroventil gemäß Anspruch 1 gelöst.

Die vorliegende Erfindung schafft ein Mikroventil mit einem mikromechanisch strukturierten Chip, der einen Ventilsitz mit einer Durchflußöffnung durch denselben, eine elastische Aufhängungsvorrichtung und einen Randbereich festlegt. Eine Ventilplatte ist vorgesehen, die durch eine piezoelektrische Betätigungsvorrichtung gebildet ist, und die mit dem Randbereich des mikromechanisch strukturierten Chips verbunden ist, wobei die Erstreckung der piezoelektrischen Betätigungsvorrichtung in deren Längsrichtung durch das Anlegen einer elektrischen Spannung verringerbar ist. Eine durch das Anlegen einer elektrischen Spannung an die piezoelektrische Betätigungsvorrichtung bewirkte Verringerung der Erstreckung der piezoelektrischen Betätigungsvorrichtung in ihrer Längsrichtung wird mechanisch durch die Verbindung derselben mit dem Randbereich des mikromechanisch strukturierten Chips sowie durch die Aufhängungseinrichtung in eine Bewegung der Ventilplatte gegenüber dem Ventilsitz im wesentlichen senkrecht zu der Längsrichtung umgesetzt, wodurch die Ventilplatte die Durchflußöffnung im Ventilsitz freigibt oder verschließt.

Die Erfindung sieht vor, eine Durchflußöffnung innerhalb des Ventilsitzes, der als eine Verdickung einer Membran ausgebildet ist, vorzusehen, wodurch die vom Ventilsitz umschlossene, nicht druckausgeglichene Fläche reduziert werden kann und die vom Piezoaktor erbrachte Kraft in eine erhöhte Auslenkung und somit einen größeren Ventildurchfluß umgesetzt werden kann.

Durch das Mikroventil gemäß der vorliegenden Erfindung kann aufgrund einer mechanischen Übersetzung zwischen einem Stößel und einer piezoelektrischen Betätigungsvorrichtung, wobei die mechanische Übersetzung durch die Aufhängungsvorrichtung des Stößels geliefert wird, die Baugröße von piezoelektrisch betriebenen Ventilen deutlich reduziert werden. Durch die Hebelübersetzung wird eine relativ geringe laterale Schrumpfung, d.h. eine Änderung der Erstreckung der Piezokeramik in Längsrichtung, in eine relativ hohe vertikale Auslenkung, d.h. eine hohe Auslenkung senkrecht zu der Erstreckung der Piezokeramik in Längsrichtung, des Ventilstößels über dem Ventilsitz umgewandelt. Dadurch sind auf geringer Fläche große Öffnungsweiten des Ventils realisierbar. Die nachfolgend beschriebenen Ventile können zudem im Gegensatz zu den bisher bekannten Ausführungen mit einer, in der Halbleitertechnik üblichen, Full-Wafer-Verbindungstechnik montiert werden. Dies bedeutet, daß auf einem Substrat nebeneinander sehr viele identische Bauteile gleichzeitig hergestellt werden können. Durch Vereinzeln am Ende des Herstellungsprozesses werden dann die einzelnen Ventile gefertigt. Durch die Verwendung dieses sogenannten Batch-Verfahrens steigt die Reproduzierbarkeit der Bauteilspezifikationen. Durch diese Herstellung wird sowohl eine Kostenersparnis, da die Strukturen gleichzeitig gefertigt werden können, als auch eine Vereinfachung, da bereits ein Funktionstest im Waferverbund stattfinden kann, erreicht.

Die Baugröße von piezoelektrisch betriebenen Mikroventilen, die gemäß der Erfindung aufgebaut sind, kann bei gleichbleibendem Durchfluß im Vergleich zu bekannten Mikroventilen drastisch verringert sein. Dies ermöglicht eine höhere Packungsdichte, beispielsweise bei sogenannten Ventilinseln, wodurch es möglich wird, z.B. pneumatisch gesteuerte Maschinen zu verkleinern oder überhaupt erst zu realisieren. Vor allem auch der Einsatz von Mikroventilen im Kraftfahrzeugbereich ist eng mit der Baugröße und dem daraus resultierenden Gewicht der Mikroventile gekoppelt. Daneben können, wenn die bisherige Baugröße beibehalten wird, höhere Durchflüsse erzielt werden. Somit können schnellere Schaltzeiten, beispielsweise von Arbeitskolben erreicht werden. Durch die verringerte Baugröße, die für einen gegebenen Durchfluß nötig ist, sind ferner die Kosten für die Gehäusung reduziert.

Bevorzugte Ausführungsbeispiele der Erfindung werden nachfolgend bezugnehmend auf die beiliegenden Zeichnungen näher erläutert. Es zeigen:
- Fig. 1A und 1B: schematische Querschnittansichten zur Veranschaulichung eines piezoelektrischen Aktors für ein Mikroventil;
- Fig. 2A und 2B: schematische Querschnittansichten eines ersten Mikroventils im Ruhezustand bzw. im aktivierten Zustand;
- Fig. 3: eine schematische Querschnittansicht eines alternativen Mikroventils im Ruhezustand;
- Fig. 4: eine schematische Querschnittansicht eines weiteren Mikroventils im Ruhezustand; und
- Fig. 5: eine schematische Querschnittsdarstellung eines Ausführungsbeispiels des Mikroventils gemäß der vorliegenden Erfindung im Ruhezustand.

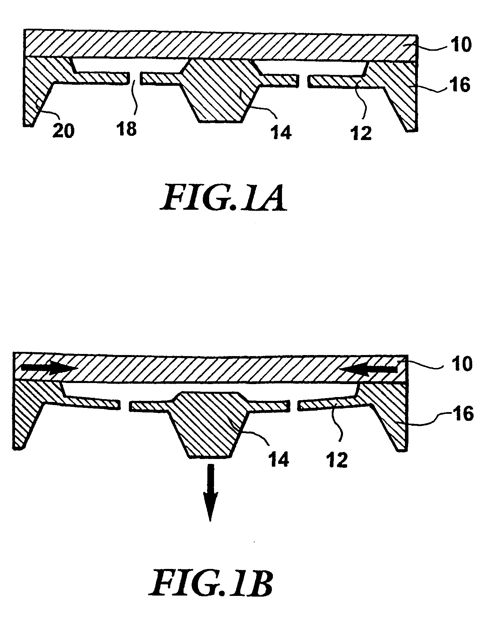

Ein Betätigungsglied, bestehend aus einer Piezokeramik und einem mittels einer Aufhängungsvorrichtung 12 an der Piezokeramik 10 befestigten Stößel 14, ist in den Fig. 1A und 1B dargestellt. Die Piezokeramik 10 dient als eigentlicher Antrieb. An die Piezokeramik 10 ist in üblicher Weise über an derselben angebrachte Elektroden (nicht gezeigt) eine Spannung anlegbar.

An der Piezokeramik 10 ist ein mikromechanisch strukturierter Chip 16 angebracht. Der Chip ist bei einem bevorzugten Ausführungsbeispiel ein Halbleiter-Chip. Der mikromechanisch strukturierte Chip 16 kann beispielsweise mittels herkömmlicher Ätztechniken gefertigt sein. Als Chip-Material kann beispielsweise Silizium verwendet sein. Alternativ kann der Chip auch ein mittels eines Spritzguß-Verfahrens, z.B. LIGA-Verfahrens (LIGA = Lithographie, Galvanische Abformung), gefertigter Chip sein und somit aus Kunststoff bestehen.

Bei dem in den Fig. 1A und 1B dargestellten Betätigungsglied ist der Chip an allen Rändern fest mit der Piezokeramik verbunden, während der im wesentlichen in der Mitte des mikromechanisch strukturierten Chips befindliche, an den elastischen Aufhängungen 12 befestigte Stößel 14 vertikal beweglich ist. Bei einem 2/2-Wege-Ventil ist es jedoch nicht notwendigerweise erforderlich, daß der Chip an allen Rändern mit der Piezokeramik verbunden ist, da es für die Wirkungsweise der piezoelektrischen Betätigung des Stößels ausreicht, wenn der Chip zumindest an zwei voneinander beabstandeten Enden, die vorzugsweise sich gegenüberliegende Enden sind, mit der Piezokeramik verbunden ist, wobei der Stößel in einem Bereich zwischen den an der Piezokeramik befestigten Abschnitten des Chips angeordnet ist.

Die elastischen Aufhängungen 12 können aus einer Membran bestehen, in der Durchführungen 18 für einen Druckausgleich angeordnet sein können. Die elastischen Aufhängungen können jedoch auch aus einzelnen Streifen bestehen, die den Stößel 14 mit dem an der Piezokeramik befestigten Teil des mikromechanisch strukturierten Chips 16 verbinden. Entlang des Umfangs weist der mikromechanisch gefertigte Chip eine sich von der Piezokeramik 10 weg erstreckende Umrandung 20 auf, die für eine Befestigung des Betätigungsglieds an einem Ventilgrundkörper dienen kann.

In Fig. 1A ist der Zustand des Betätigungsglieds dargestellt, wenn keine Spannung an die Piezokeramik 10 angelegt ist. Wird eine elektrische Spannung an die Piezokeramik angelegt, verringert die Piezokeramik 10 ihre laterale Ausdehnung. Dies ist durch die parallel zu der Piezokeramik verlaufenden Pfeile in den Figuren, beispielsweise in Fig. 1B, dargestellt. Der entlang der Umrandung der Piezokeramik 10 mit derselben verbundene mikromechanisch strukturierte Chip 16 wird dabei gestaucht, wobei der Stößel 14 aufgrund der in dem mikromechanisch strukturierten Chip 16 auftretenden lateralen Druckspannung dazu tendiert, sich in vertikaler Richtung zu bewegen. Dies ist durch den Pfeil in Fig. 1B angezeigt. Bei einer geeigneten Formgebung des Chips 16 läßt sich hierbei eine Hebelwirkung erzielen, die den geringen lateralen Schrumpf der Piezokeramik 10 in eine hohe vertikale Auslenkung des Stößels 14 übersetzt und damit eine große Ventilöffnungsweite ermöglicht. Im Gegensatz dazu folgt bei Mikroventilen herkömmlicher Bauart der Ventilstößel direkt der Bewegung der Piezokeramik und ist damit in seiner Auslenkung auf den Wert der Auslenkung der Piezokeramik beschränkt.

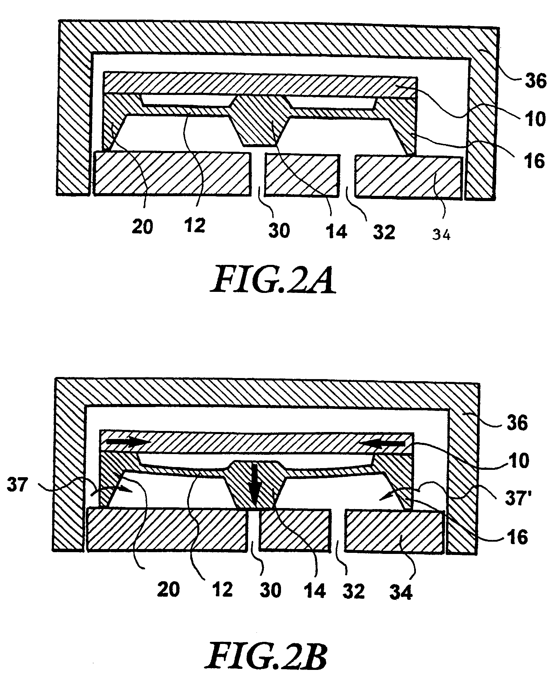

In den Fig. 2A und 2B ist ein erstes Ausführungsbeispiel eines Mikroventils dargestellt. Es handelt sich dabei um ein 2-2-NO-Mikroventil, das zwei Wege, d.h. zwei Durchlaßöffnungen, und zwei Schaltzustände aufweist, wobei das Mikroventil im deaktivierten Zustand geöffnet ist. Bei dem in den Fig. 2A und 2B dargestellten Ausführungsbeispiel des Mikroventils befinden sich die Ventilöffnungen 30 und 32 in einer Grundplatte 34, die beispielsweise aus Keramik besteht. Die Grundplatte 34 kann ferner gleichzeitig zur elektrischen Kontaktierung dienen. An den Ventilöffnungen 30 und 32 sind Fluidanschlüsse (nicht dargestellt) angebracht, beispielsweise ein Verbraucheranschluß und ein Druckanschluß.

Auf der Grundplatte 34 ist ein mikrostrukturierter Stößel-Chip 16, der bei diesem Ausführungsbeispiel dem Chip entspricht, der in den Fig. 1A und 1B dargestellt ist, entlang seiner Umrandung, d.h. entlang der Randnase 20, befestigt, derart, daß der Stößel 14 in der Mitte des mikromechanisch strukturierten Chips 16 frei beweglich ist. An dem mikromechanisch strukturierten Chip 16 ist ferner, wie bezugnehmend auf die Fig. 1A und 1B beschrieben wurde, eine Piezokeramik 10 angebracht. Die der Grundplatte 34 zugewandte Seite des Stößels 14 ist dabei gegenüber der Oberfläche der Grundplatte 34 etwas zurückgesetzt. Dadurch wird die Höhe der Ventilöffnung definiert.

Bei dem in den Fig. 2A und 2B dargestellten Ausführungsbeispiel ist der der Grundplatte 34 zugewandte Chiprand, d.h. die Fläche der Randnase 20, die an der Grundplatte 34 befestigt ist, sehr schmal ausgestaltet, was eine spannungsfreie Drehbewegung des Stößel-Chips ermöglicht. An der Grundplatte 34 ist bei dem dargestellten Ausführungsbeispiel ferner eine Gehäuseabdeckung 36 angebracht, die eine Kapselung für den oben beschriebenen Aufbau liefert und ferner als Gasführung verwendet werden kann.

Wird nun eine elektrische Spannung an die Piezokeramik 10 angelegt, so ändert dieselbe ihre Erstreckung in Längsrichtung, d.h. sie verringert ihre laterale Ausdehnung. Dies ist in Fig. 2B wiederum durch die parallel zur Längsausdehnung der Piezokeramik 10 verlaufenden Pfeile angezeigt. Der an der Umrandung mit der Piezokeramik 10 verbundene mikrostrukturierte Stößel-Chip 16 wird dabei gestaucht und tendiert dazu, die auftretende laterale Druckspannung durch ein Ausweichen in vertikaler Richtung zu reduzieren. Durch diese vertikale Bewegung des Stößels 14 wird bewirkt, daß die Durchlaßöffnung oder Ventilöffnung 30 der Grundplatte 34 verschlossen wird. Durch die Formgebung des mikrostrukturierten Stößel-Chips 16 kann eine Übersetzung einer geringen lateralen Kontraktion der Piezokeramik 10 in eine hohe vertikale Auslenkung des Stößels 14 erreicht werden. Die in Fig. 2B dargestellten Pfeile 37 und 37' stellen ferner die nahezu spannungsfreie Drehbarkeit des Stößel-Chips dar, die durch die schmale Befestigungsfläche des mikrostrukturierten Stößel-Chips an der Grundplatte 34 gewährleistet ist. Durch die Wahl der Richtung der Fluidströmung durch das Ventil kann das Öffnen des Ventils unterstützt werden, oder alternativ das Schließen desselben, wodurch sich ein verbessertes Leckratenverhalten ergibt.

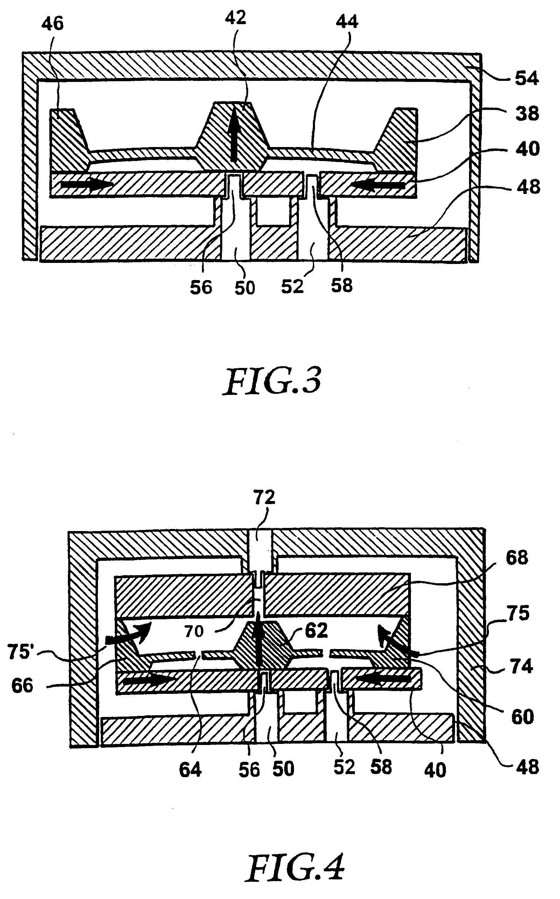

In Fig. 3 ist ein zweites Ausführungsbeispiel eines Mikroventils dargestellt. Bei diesem Ausführungsbeispiel handelt es sich um ein 2/2-NG-Ventil, das zwei Wege und zwei Schaltzustände aufweist und im deaktivierten Zustand geschlossen ist. Bei dem in Fig. 3 dargestellten Ausführungsbeispiel ist wiederum ein mikromechanisch strukturierter Stößel-Chip 38 an einer Piezokeramik 40 angebracht. Der Stößel-Chip 38 weist wiederum einen Stößel 42 auf, der über eine elastische Aufhängung 44 an einem entlang des Umfangs des Stößel-Chips mit der Piezokeramik 40 verbundenen Teil 46 des Stößel-Chips 38 angebracht ist. Die Montage des Stößel-Chips an der Piezokeramik 40 erfolgt in diesem Fall derart, daß der Ventilstößel 42 durch den Montageprozess bereits mit einer gewissen mechanischen Vorspannung beaufschlagt ist, und auf dem Ventilsitz aufliegt, wobei der Ventilsitz dadurch verschlossen wird.

Das in Fig. 3 dargestellte Ausführungsbeispiel weist wiederum eine beispielsweise aus Keramik bestehende Grundplatte 48, die zwei Ventilöffnungen 50 und 52 aufweist, sowie einen Gehäusedeckel 54 auf. Bei diesem Ausführungsbeispiel weist jedoch auch die Piezokeramik 40 zwei Durchlaßöffnungen 56 und 58 auf. Die Piezokeramik 40 ist über eine Befestigungsvorrichtung, die jedoch eine laterale Expansion und Kontraktion der Piezokeramik zuläßt, mit der Grundplatte 48 derart verbunden, daß die Ventilöffnung 50 der Grundplatte 48 mit der Durchlaßöffnung 56 der Piezokeramik 40 fluidmäßig verbunden ist, und daß die Ventilöffnung 52 der Grundplatte 48 mit der Durchlaßöffnung 58 der Piezokeramik 40 verbunden ist.

In dem Fall, in dem keine Spannung an die Piezokeramik angelegt ist, verschließt der Stößel 42 bei dem in Fig. 3 dargestellten Ausführungsbeispiel des Mikroventils die Durchlaß-öffnung 56 in der Piezokeramik 40 und somit die mit der Durchlaßöffnung 56 fluidmäßig verbundene Ventilöffnung 50 in der Grundplatte 48. Wird nun eine Spannung an die Piezokeramik 40 angelegt, verringert dieselbe durch den inversen piezoelektrischen Effekt ihre Ausdehnung in Längsrichtung, wobei diese Schrumpfung in eine Vertikalbewegung des Stößels 42 nach oben übersetzt wird. Dadurch wird die Durchlaßöffnung 56 in der Piezokeramik 40 freigegeben und damit auch die Ventilöffnung 50 in der Grundplatte 48. Bei diesem Ventil kann die Richtung der Fluidströmung derart gewählt werden, daß das Schließen des Ventils unterstützt wird. Dies führt zu einem verbesserten Schließ- und Leckratenverhalten.

Ein drittes Ausführungsbeispiel eines Mikroventils ist in Fig. 4 dargestellt. Die Grundplatte 48 mit Durchlaßöffnungen 50, 52 und die Piezokeramik 40 mit Durchlaßöffnungen 56 und 58 weisen bei dem in Fig. 4 dargestellten Ausführungsbeispiel den gleichen Aufbau wie bei dem bezugnehmend auf Fig. 3 beschriebenen Ausführungsbeispiel auf. Auf der Piezokeramik ist wiederum ein mikromechanisch strukturierter Stößel-Chip 60 angeordnet. Die elastischen Aufhängungen, durch die der Stößel 62 an dem an der Piezokeramik 40 befestigten Teil des Stößel-Chips 60 befestigt ist, weisen Fluiddurchführungen auf, die beispielhaft als Unterbrechungen 64 dargestellt sind.

Der mikromechanisch strukturierte Stößel-Chip 60 weist wiederum eine Randnase 66 auf, auf der bei dem dritten Ausführungsbeispiel eines Mikroventils ein weiterer Ventilsitz 68 angeordnet ist. Der Ventilsitz 68 weist eine Durchführungsöffnung 70 auf. Die Durchführungsöffnung 70 ist fluidmäßig mit einer Durchführungsöffnung 72 eines den beschriebenen Aufbau kapselnden Gehäusedeckels 74 verbunden. Durch die Pfeile 75 und 75' in Fig. 4 ist wiederum die nahezu spannungsfreie Drehbarkeit, die durch die schmale obere Fläche der Randnase 66 gewährleistet ist, angezeigt.

Das in Fig. 4 dargestellte Mikroventil kann als 3/2-Wege-Ventil bezeichnet werden. Ein solches Ventil weist 3 Wege und 2 Schaltzustände auf. Bei einem derartigen Ventil wird naturgemäß ein zweiter Ventilsitz benötigt. Dieser ist bei dem dargestellten Ausführungsbeispiel aus einem weiteren Chip, beispielsweise Keramik, Silizium oder dergleichen, ausgebildet. Bei einem derartigen 3/2-Wege-Ventil, wie es beispielsweise bezugnehmend auf Fig. 4 beschrieben wurde, ist der Stößel-Chip entlang seines gesamten Umfangs vollständig sowohl mit der Piezokeramik als auch dem zweiten Ventilsitz verbunden, da durch den Raum zwischen dem Chip und der Piezokeramik und den Raum zwischen dem Chip und dem zweiten Ventilsitz Fluid geführt wird.

Bei dem in Fig. 4 dargestellten Mikroventil ist die Ventilöffnung 50 im entspannten Zustand der Piezokeramik 40 geschlossenen. Wird nun eine Spannung an die Piezokeramik 40 angelegt, verringert sich die Längsausdehnung derselben, wodurch eine Vertikalbewegung des Stößels 62 nach oben bewirkt wird. Dadurch schließt der Stößel 62 die Durchlaßöffnung 70 in dem zweiten Ventilsitz 68 und damit die Öffnung 72 in dem Gehäusedeckel 74.
3/2-Wege-Ventile werden aus Sicherheitsgründen zumeist im Normal-Geschlossen-Modus betrieben, sind also ohne anliegende Energieversorgung geschlossen. Aus diesem Grunde ist es vorteilhaft, die im Montageprozeß auf den Ventilstößel aufgebrachte Vorspannung so hoch zu wählen, daß der Stößel auch bei Druckbeaufschlagung von unten am Ventilsitz verbleibt und das Ventil damit geschlossen bleibt.

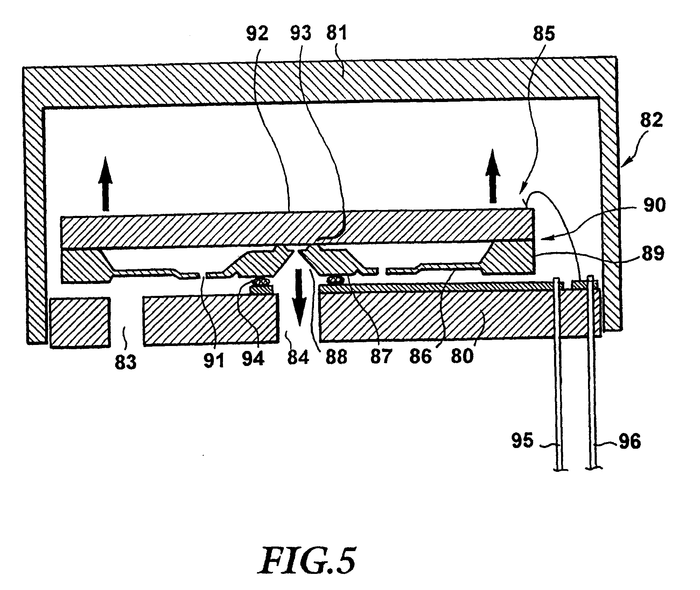

In Fig. 5 ist ein Ausführungsbeispiel eines Mikroventils gemäß der vorliegenden Erfindung dargestellt. Das in Fig. 5 gezeigte Ausführungsbeispiel des Mikroventils umfaßt wiederum eine Grundplatte 80, die zusammen mit einer Gehäuseabdeckung 81 ein Ventilgehäuse 82 bildet. Die Grundplatte 80 weist einerseits eine Druckanschlußöffnung 83 und andererseits eine Auslaßöffnung 84 auf, durch die das gesteuerte Fluid einem Verbraucher zuführbar ist. Eine Ventilstruktur 85 innerhalb des Gehäuses 82 hat eine elastische Aufhängung 86, die vorzugsweise in ihrem Mittenbereich einen Stößel 87 aufweist, durch den sich eine Durchflußöffnung 88 erstreckt. Die elastische Aufhängung 86 erstreckt sich von dem mittigen Stößel 87, der bei dem Ventil der vorliegenden Erfindung auch als Ventilsitz bezeichnet werden kann, bis zu einem Randbereich 89, wobei der Randbereich 89, der Stößel 87 und die Aufhängung 86 miteinander innerhalb eines Stößel-Chips einstückig mit mikromechanischen Herstellungsverfahren ausgebildet sind. Wie bereits bei den vorher beschriebenen Ausführungsbeispielen kann der Stößel-Chip 90 mittels mikromechanischer Methoden aus Silizium gefertigt sein.

Innerhalb der elastischen Aufhängung 86 sind Fluiddurchführungsöffnungen 91 vorgesehen.

Der Stößel-Chip 90 wird von einer Ventilplatte 92 überspannt, die am Randbereich 89 des Stößel-Chips 90 mit diesem fest verbunden ist. Der Stößel 87 weist an seiner der Ventilplatte 92 zugewandten Fläche eine Ventildichtkante 93 auf, die bei Nicht-Betätigung des Ventils gegen die Ventilplatte 92 anliegt. Die Ventildichtkante 93 umschließt die Durchflußöffnung 88.

Der Stößel ist auf seiner der Ventildichtkante 93 abgewandten Seit fluiddicht an der Grundplatte 80 beispielsweise durch eine elektrisch leitfähige Klebeverbindung 94 befestigt.

Bei dem hier gezeigten Ausführungsbeispiel besteht die Ventilplatte 92 aus einer Piezokeramik, deren Längserstreckung sich durch Anlegen einer elektrischen Spannung ändert.

Zwei Spannungszuführungsleitungen 95, 96 erstrecken sich durch die Grundplatte 80. Eine der Leitungen steht über die elektrisch leitfähige Klebeverbindung 94 mit dem seinerseits elektrisch leitfähigen Stößel-Chip 90 in Verbindung und beaufschlagt somit die Ventilplatten-Piezokeramik 92 von ihrer einen Seite, während ein Bonddraht eine Verbindung der anderen Seite der Ventilplatten-Piezokeramik mit der zweiten Leitung 96 herstellt.

Bei Anlegen einer Spannung an die Piezokeramik, die gleichzeitig die Ventilplatte 92 bildet, zieht diese sich in ihrer Längserstreckung zusammen, wodurch die durch die Piezokeramik selbst gebildete Ventilplatte 92 von der Ventildichtkante 93 abgehoben wird. In diesem betätigten Zustand öffnet sich die Fluidverbindung von der Druckanschlußöffnung 83 über die Fluiddurchführungsöffnungen 91 und zwischen der Ventilplatte 92 und der Ventildichtkante 93 hindurch zu der Durchflußöffnung 88, die sich durch den Stößel 87 erstreckt und die zur Auslaßöffnung 84 in der Grundplatte 80 führt.

Bei dem oben beschriebenen Ausführungsbeispiel gemäß Fig. 5 bildet die Piezokeramik die Ventilplatte 92. Für den Fachmann ist es jedoch offenkundig, daß die Ventilplatte auch durch ein von der Piezokeramik separat ausgebildetes Element ausgeführt sein kann, welches beispielsweise an der dem Stößel 87 zugewandten Seite der Piezokeramik an dieser befestigt ist.

Mit anderen Worten ist es für die Zwecke der Erfindung gleichgültig, ob die piezoelektrische Betätigungsvorrichtung, die beim Ausführungsbeispiel durch die Piezokeramik gebildet ist, auch die Funktion der Ventilplatte übernimmt, welche im geschlossenen Zustand des Ventils die Durchfluß-öffnung innerhalb des Stößels abdeckt, oder ob die Ventilplatte ein separates Element ist, welches lediglich in geeigneter Weise durch die Aufhängung 86 gegenüber dem Stößel geführt bewegt wird, wenn die piezoelektrische Betätigungsvorrichtung betätigt wird.

In Abweichung von den speziell beschriebenen Ausführungsbeispielen umfaßt die vorliegende Erfindung auch Mikroventile, die sich bezüglich ihres Aufbaus, der Anordnung der Durchlaßöffnungen, usw. von den beschriebenen Ausführungsbeispielen unterscheiden, solange bei diesen Mikroventilen die erfindungsgemäße Betätigung des Ventilstößels verwendet ist.

Die vorliegende Erfindung schafft somit Mikroventile, die bei einer relativ geringen Baugröße relativ große Durchlaß-öffnungen ermöglichen. Ferner ermöglichen die erfindungsgemäßen Mikroventile die Herstellung derselben mittels einer in der Halbleitertechnik üblichen Full-Wafer-Verbindungstechnik. Die erfindungsgmäßen Mikroventile weisen somit gegenüber bekannten Mikroventilen Vorteile bezüglich der Einfachheit der Herstellung sowie ferner eine Kostenersparnis bei derselben auf.

## Patentansprüche

1. Mikroventil, mit folgenden Merkmalen:
einem mikromechanisch strukturierten Chip, der einen Ventilsitz (87) mit einer Durchflußöffnung (88) durch denselben, eine elastische Aufhängungsvorrichtung (86) und einen Randbereich (89) festlegt;
einer Ventilplatte (92), die durch eine piezoelektrische Betätigungsvorrichtung gebildet ist, und die mit dem Randbereich (89) des mikromechanisch strukturierten Chips verbunden ist, wobei die Erstreckung der piezoelektrischen Betätigungsvorrichtung in deren Längsrichtung durch das Anlegen einer elektrischen Spannung verringerbar ist,
wobei eine durch das Anlegen einer elektrischen Spannung an die piezoelektrische Betätigungsvorrichtung bewirkte Verringerung der Erstreckung der piezoelektrischen Betätigungsvorrichtung in ihrer Längsrichtung durch die Verbindung derselben mit dem Randbereich des mikromechanisch strukturierten Chips sowie durch die Aufhängungsvorrichtung (86) mechanisch in eine Bewegung der Ventilplatte (92) gegenüber dem Ventilsitz (87) im wesentlichen senkrecht zu der Längsrichtung umgesetzt wird, wodurch die Ventilplatte die Durchflußöffnung (88) im Ventilsitz (87) freigibt oder verschließt.

2. Mikroventil gemäß Anspruch 1, ferner mit
einem Grundkörper (80) mit einer Durchlaßöffnung (84),
wobei der Ventilsitz (87) derart mit dem Grundkörper (80) verbunden ist, daß die Durchlaßöffnung (84) mit der Durchflußöffnung (88) in Fluidverbindung steht.

3. Mikroventil gemäß Anspruch 1 oder 2, bei dem der Ventilsitz (87) auf seiner der Ventilplatte (92) zugewandten Seite eine Ventildichtkante (93) aufweist, welche die Durchflußöffnung (88) umschließt und im nichtbetätigten Zustand des Mikroventils gegen die Ventilplatte (92) anliegt.

## Claims

1. Microvalve comprising:
a micromechanically structured chip defining a valve seat (87) with a flow opening (88) therethrough, an elastic suspension device (86) and an edge region (89);
a valve plate (92) which is defined by a piezoelectric actuator and which is connected to the edge region (89) of the micromechanically structured chip, the longitudinal dimensions of said piezoelectric actuator being adapted to be changed by the application of an electric voltage;
wherein a decrease in the longitudinal dimensions of the piezoelectric actuator caused by the application of an electric voltage to said piezoelectric actuator is, due to the connection of said piezoelectric actuator with the edge region of the micromechanically structured chip and by means of the suspension device (86), mechanically converted into a movement of the valve plate (92) relative to the valve seat (87) essentially at right angles to the longitudinal direction, whereby the valve plate will open or close the flow opening (88) in the valve seat (87).

2. Microvalve according to claim 1, comprising in addition
a base element (80) provided with a passage opening (84),
wherein the valve seat (87) is connected to said base element (80) in such a way that the passage opening (84) is in fluid communication with the flow opening (88).

3. A microvalve according to claim 1 or 2, wherein the valve seat (87) is provided with a valve sealing edge (93) on its side facing the valve plate (92), said valve sealing edge (93) enclosing the flow opening (88) and abutting on the valve plate (92) in the non-operative condition of the microvalve.

## Revendications

1. Microsoupape, aux caractéristiques suivantes :
une puce structurée par procédé micromécanique définissant un siège de soupape (87) avec une ouverture de passage (88) dans celui-ci, un dispositif de suspension élastique (86) et une zone de bordure (89) ;
une plaque de soupape (92) formée par un dispositif d'actionnement piézo-électrique et assemblée avec la zone de bordure (89) de la puce structurée par procédé micromécanique, l'extension du dispositif d'actionnement piézo-électrique dans le sens longitudinal pouvant être réduite par l'application d'une tension électrique,
une réduction de l'extension du dispositif d'actionnement piézo-électrique dans le sens longitudinal provoquée par l'application d'une tension électrique sur le dispositif d'actionnement piézo-électrique étant convertie mécaniquement, par la connexion de ce dernier avec la zone de bordure de la puce structurée par procédé micromécanique ainsi que par le dispositif de suspension (86), en un mouvement de la plaque de soupape (92) par rapport au siège de soupape (87) sensiblement perpendiculaire au sens longitudinal, d'où la plaque de soupape libère ou obture l'ouverture de passage (88) dans le siège de soupape (87).

2. Microsoupape suivant la revendication 1, avec, par ailleurs,
un corps de base (80) avec une ouverture de passe (84),
le siège de soupape (87) étant assemblé avec le corps de base (80) de telle sorte que l'ouverture de passage (84) se trouve en communication de fluide avec l'ouverture de passage (88).

3. Microsoupape suivant la revendication 1 ou 2, dans laquelle le siège de soupape (87) présente, sur sa face orientée vers la plaque de soupape (92), une arête d'étanchéité de soupape (93) qui entoure l'ouverture de passage (88) et s'appuie sur la plaque de soupape (92) à l'état non-actionné de la microsoupape.
